# EUROPEAN PATENT SPECIFICATION

(11) **EP 2 407 702 B1**
(45) Date of publication and mention of the grant of the patent: **27.03.2013**
(21) Application number: 10425242.4
(22) Date of filing: 16.07.2010
(51) Int. Cl.: F16L 37/36

(54) **Compact cartridge coupling**
Kompakter Kartuschenanschluss
Couplage de cartouche compact

(43) Date of publication of application: 18.01.2012
(73) Proprietor: Faster S.p.A., 20124 Milan (IT)
(72) Inventor: Rusconi, Paolo, 26027 Rivolta d'Adda (IT); Ferrara, Rocco, 24045 Fara Gera d'Adda (IT)
(74) Representative: Borsano, Corrado

(56) References cited:
- EP-A1- 1 058 043
- EP-A2- 0 038 056
- US-A- 4 598 896
- US-B1- 6 776 187

## Description

The present invention relates to a compact cartridge coupling.

Quick couplings according to ISO Standard 7241 are now consolidated on the international market, especially concerning the agricultural/forestry field. ISO standards regulate the sizes of the couplings in order to ensure the interchangeability of different manufacturers, the ability to be coupled and various minimum use requirements, such as pressure, capacity and so on.

Among the quick couplings according to the standard above, cartridge couplings are characterized by a compact design while maintaining the same functional principles of ISO Standard 7241.

In particular, cartridge couplings are inserted into a housing commonly made of cast iron in order to make the cartridge coupling employable with increased effectiveness where the operating conditions provide for high operating pressures, in particular also with sudden variations of the flow direction and particularly high pressure impulse frequencies.

Moreover, cartridge couplings are generally employed by positioning them inside the housings made of cast iron, for example, when the conditions of use provide for the presence of earth, mud and debris, such as precisely occurs in the case of uses in the agricultural and forestry field.

A similar coupling is shown in document EP 10 58043 A1.

Therefore, one of the main drawbacks of the cartridge couplings known from the state of the art consists of the non-optimal reliability, with particular reference to the resistance and duration of the components and of the coupling as a whole.

Moreover, an improvable aspect of the cartridge couplings known from the state of the art consists in the overall volumes.

Therefore, it is the primary task of the present invention to suppress or reduce the above-mentioned drawbacks..

Therefore, it is the object of the present invention within the scope of this task to provide a quick cartridge coupling which is characterized by an overall reduced volume, so as to be arranged in narrow spaces.

It is also a further object of the present invention to provide a quick cartridge coupling equipped with a decompression system which permits to moderate the pressure inside the system, thus reducing the coupling and uncoupling loads.

Not last, it is an object of the present invention to provide a quick cartridge coupling which allows the male to be uncoupled thus leaving the latter under pressure after the disconnection.

This task and these and other objects which will become more apparent hereinafter are achieved by a cartridge coupling to connect a pressurized fluid line between a vehicle or apparatus and a user, comprising an external housing within which a female semi-coupling is inserted comprising a front valve assembly and adapted to receive a male semi-coupling, said housing comprising at least one recovery channel for the clean oil and one draining channel for the dirty oil, characterized in that it further comprises decompression means, on said female semi-coupling, to moderate the pressure inside the line thus facilitating the operations of coupling and uncoupling the male semi-coupling to/from said female semi-coupling.

The cartridge coupling according to the present invention is also characterized in that said decompression means allow the pressure in the female part to be moderated thus allowing a male under pressure to be coupled and uncoupled.

Again, the cartridge coupling according to the present invention is characterized in that it further comprises hydraulic blocking means adapted to prevent the front valve assembly from closing when the male coupling is inserted and regardless of the flow direction and pressure in the line, and adapted to allow the overtravel of said valve assembly required for the complete insertion of the male semi-coupling.

Further features and advantages of the present invention will become more apparent from the following detailed description, provided by way of non-limiting example and illustrated in the accompanying drawings, in which:
figure 1 shows a sectional view with a longitudinal plane of the cartridge coupling according to the present invention with a male semi-coupling inserted;
figure 2 shows a longitudinal sectional view of the cartridge coupling according to the present invention without male semi-coupling inserted;
figure 3 shows again a longitudinal sectional view of the detail indicated by letter A in figure 2;
figure 4 shows again a longitudinal sectional view of the detail indicated by letter B in figure 2;

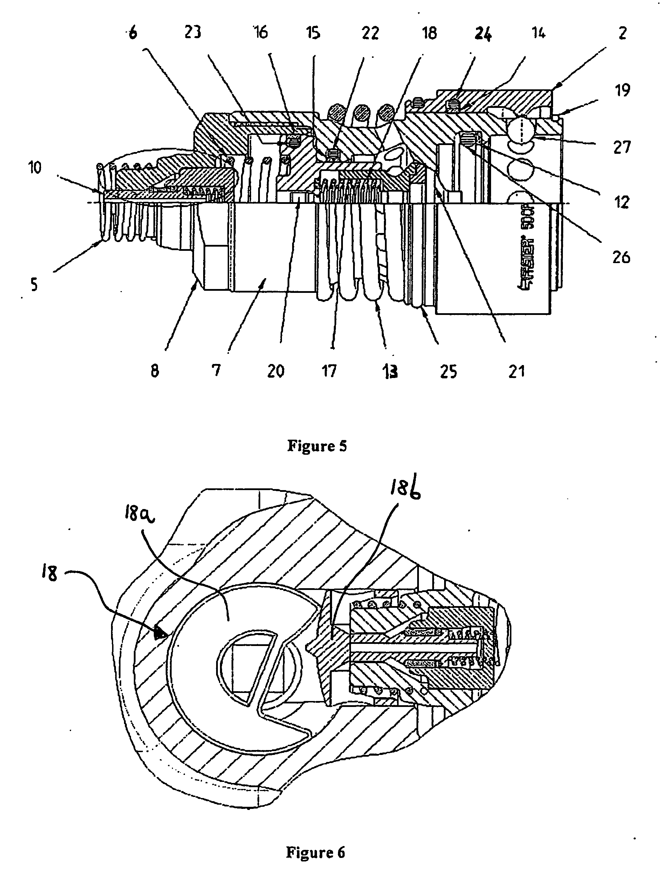

figure 5 shows again a longitudinal sectional view of the cartridge coupling in figure 1 without the external housing;
figure 6 shows a detail of the cam-lever drive system of the decompression system cam of the cartridge coupling according to the present invention;
figures 7 to 11 show a coupling cycle of the male in the female when both the semi-couplings are under pressure and without any intervention by the operator on the decompression means;
figures 12 to 15 show a coupling cycle of the male in the female when both the semi-couplings are under pressure and with the intervention by the operator on the decompression means;
figures 16 to 19 show an uncoupling cycle of the male in the female when there is pressure in the line and with the intervention by the operator on the decompression means, while leaving the male under pressure.

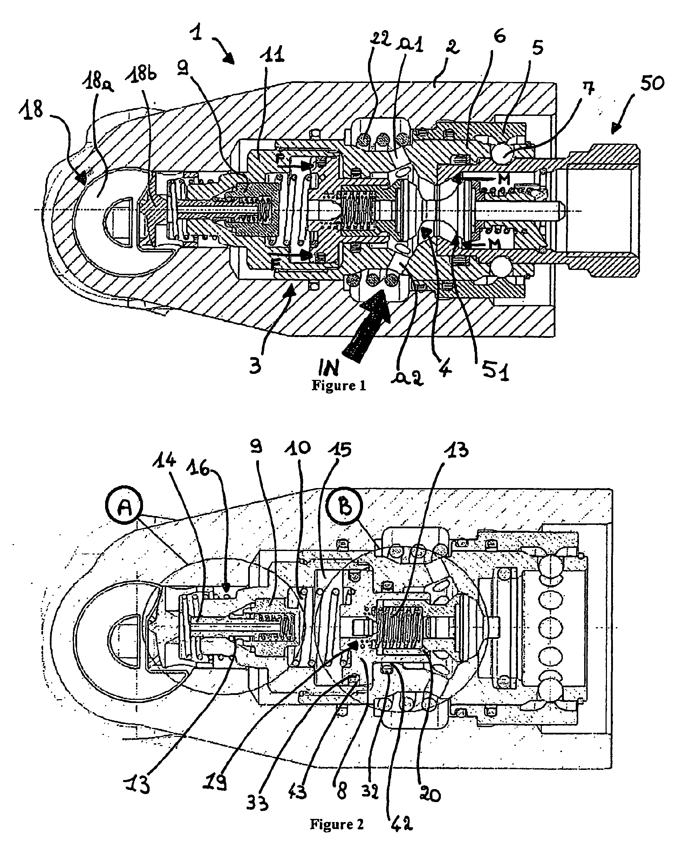

According to a preferred embodiment of the present invention shown in the mentioned figures by way of a non-limiting example, the cartridge coupling **1** according to the present invention comprises an external housing **2**, preferably made of cast iron or other suitable material, in which a female semi-coupling **3** is housed. Such a female semi-coupling is of the type adapted to receive a male semi-coupling, and is preferably of the type in accordance with the features established by ISO Standard 7241. Several conduits are obtained in said external housing **2**, for the circulation of the fluid, generally oil, which runs through the hydraulic line on which the semi-couplings are inserted. In particular, with reference to figure 1, the fluid enters the main supply conduit of the line according to the arrow indicated by **IN** thus supplying the female semi-coupling **3**. The system then provides the collection of the dirty oil by means of a front draining channel included in housing **2** and not shown in the figures, while the clean oil is collected by means of a specific recovery channel for the clean oil, not shown in the figures as well, and put back into circulation.

Said female semi-coupling **3** comprises a ring nut **5** which is mechanically blocked with respect to the external housing **2**, the ball set **6** is capable of axially translating with respect to body **2**. The ball set **6**, by means of the balls **7**, is capable of ensuring the connection of the male semi-coupling, as shown in figure 1, as the balls **7** are capable of firmly keeping the male semi-coupling **50** as known in the field.

The valve assembly **4**, provided in a substantially axial position, is capable of adhering to the walls of the internal clearance obtained inside the ball set **6** so as to close off the axial passageway to the fluid. As known again with reference to the accompanying figures, the input fluid from the main supply conduit according to the direction identified by the arrow **IN** reaches the area of the resetting spring **22** and enters the female semi-coupling from this area through the radial passage holes **a1** and **a2** until it reaches the valve assembly **4**. As long as the male semi-coupling is not coupled, the valve assembly **4** closes the axial clearance of the female semi-coupling **3**, as shown in figure 2. In this situation, the valve assembly **4** is pushed to close by the springs **13** and by the balancing slider **8**.

The valve assembly **4** comprises a valve body **4a**, equipped with a calibrated hole **20** adapted to put the interior of said valve body **4a** in communication with the exterior, axially inserted in said balancing slider **8**, more precisely inside an axial extension **8a** of said balancing slider **8**. The first spring **13** acts between said valve assembly and said balancing slider **8**, thus exerting a reaction force to the reciprocal nearing of the two components.

Again with particular reference to the figures, a chamber **15** is present behind the valve assembly **4** and the balancing slider **8**, which is filled with the pressurized fluid during the coupling operation. Said chamber is thus delimited by the balancing slider **8** and by the rear body **11**, a second spring **10** acting between said rear body **11** and said balancing slider 8 by exerting a reaction force also in this case which opposes the reciprocal nearing of the two components.

An inner body **9** is provided inside said rear body **11** and integrally therewith, which is adapted to contain the movable equipment of the decompression valve, generally indicated by the reference number **16**.

Said decompression valve, placed in an axial position at the end opposite to the semi-coupling **3** with respect to the front valve assembly **4**, comprises a decompression rod **14** and a shaped gasket **13**, adapted to make the seal between said inner body **9** and said rear body **11** and said decompression rod **14**, as better disclosed below.

The decompression valve **16**, comprising decompression rod **14**, shaped gasket **13** and unbalancing spring **17** acting between said decompression rod and said inner body **9** allows the pressure to be discharged with our without the intervention of the cam and lever actuating means, generally indicated by reference number **18**.

Said cam and lever decompression means **18** advantageously comprise at least one lever **18a** manually operable by the user acting on one cam **18b** suitably shaped and capable of selectively interacting with said decompression rod **14**.

Said balancing slider **8** comprises an internal valve assembly **19** in an axial position, movable with respect to said balancing slider **8** and capable of allowing the pressurized fluid to pass towards chamber **15**.

Again, said decompression valve **16** provides for the decompression rod **14** and the inner walls of rear body **11** being suitably shaped to make a cone-on-cone sealing in order to avoid the shaped gasket from being extruded. Moreover, said decompression rod **14** axially includes a hole which allows the oil to be discharged in the case of accumulation thereof in the rear chamber of the decompression assembly.

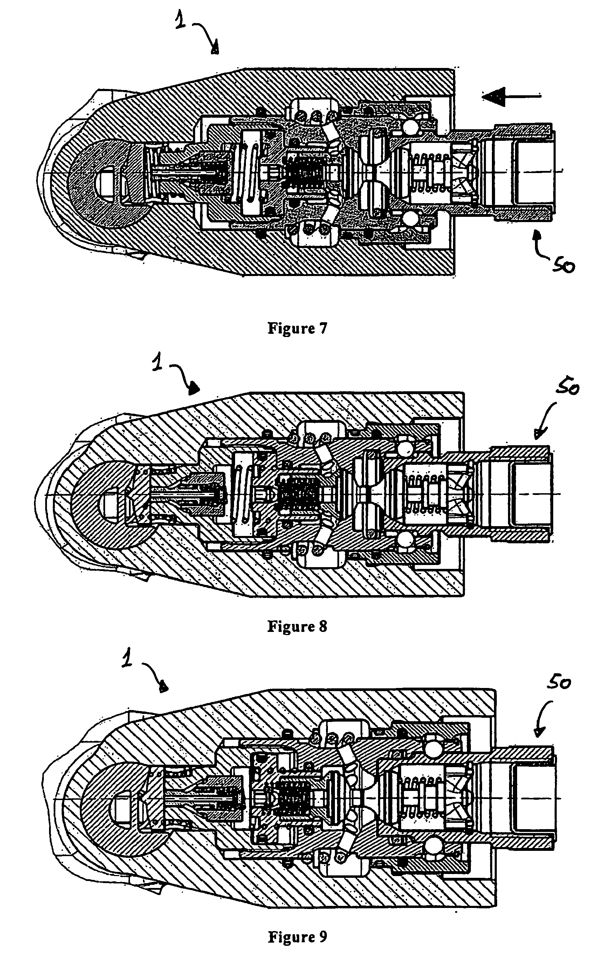

The operation of the cartridge coupling device according to the present invention will now be described again with reference to the accompanying figures, in particular with reference to figures 7 to 19.

With reference to figure 7, the step of coupling the male semi-coupling **50** with the female semi-coupling **3** occurs with a single continuous manoeuvre. In the first attachment step, the male part pushes on the balls **7** of the ball set **6** which axially translates, thus moving back as shown in figure 7, pushed by the male until the balls **7** are inserted in specific grooves provided on the external surface of the male semi-coupling **50**, as shown in figure 9.

In the situations in figures 7 and 8, the respective valves of both the male semi-coupling **50** and the female semi-coupling **3**, are closed. When the male semi-coupling **50** is inserted into the female semi-coupling **3**, the ball set **6** moves back, as mentioned, and while moving back, also causes the rear body **11** and the balancing slider **8** to move back. The rear body **11** moving back causes the decompression valve **14** to abut against the cam **18b** forming part of the decompression means **18**, and the rod **14** being in abutment causes the relative translation of the rod itself with respect to the rear body **11**, with consequential opening of the seal with gasket **13**, i.e. opening of the decompression valve of the female semi-coupling **3**. Thereby, the pressure in chamber **15** begins to discharge, and as the pressure decreases the internal valve assembly **19** opens, thus allowing the input fluid pressure in the female coupling through the calibrated hole **20** and the internal valve assembly **19**, to be further discharged through the decompression valve **16**.

Therefore, the operation of coupling the male semi-coupling **50** may be completed as shown in figure 9 even without any intervention by the operator on the decompression means **18** due to the pressure in the female semi-coupling **3** being discharged.

In the configuration in figure 9, the male is completely coupled and the pressure discharged in the female semi-coupling **3** allows the valve assembly **4** to be moved back, i.e. the opening of the valve of the female semi-coupling **3** due to the overtravel of the valve assembly **4**.

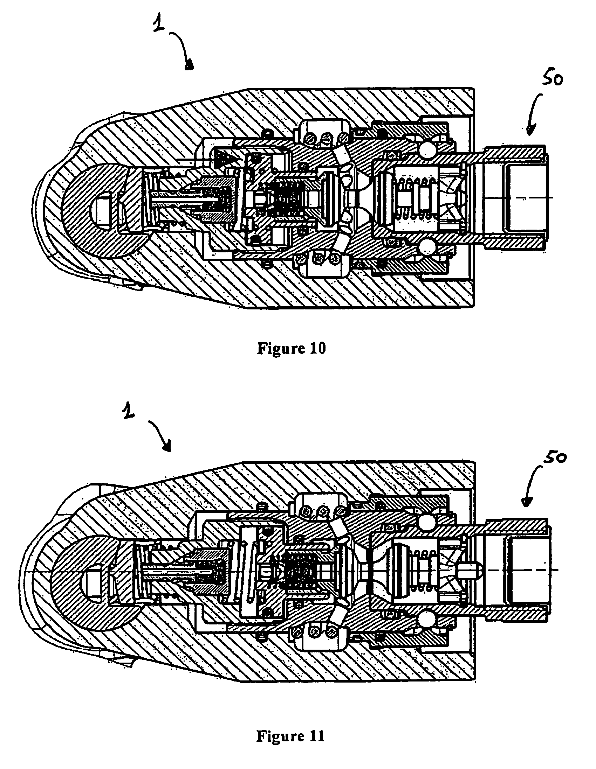

The valve assembly **4**, pushed by the valve **51** of male **50**, moves back by performing the overtravel until the balls of the female find the male groove. At this point, by releasing the male, the resetting spring **22** moves the ball set **6** forward while dragging the rear body **11** therewith, which is threaded thereto. The decompression rod **14** detaches from the cam, and springs **17** close the decompression valve as shown in figure 10.

At this point, the decompression valve is closed, therefore the pressure which fills the chamber **15** helps spring **10** push the balancing slider **8** forward, i.e. towards the male **50**. The balancing slider **8** in turn pushes the valve assembly **4** and, due to the diameter size of the balancing slider **8** as compared to the dimensions of the valve assembly **51** of the male semi-coupling **50**, the valve of the male semi-coupling is opened and therefore the line is opened, even with lower fluid pressures in the female as compared to those in the male.

In particular, the quick cartridge coupling according to the present invention is sized so as to have a 3:1 ratio between the pushing action exerted on the valve assembly **4**, by means of balancing slider **8** and chamber **15**, and the resistance force exerted by the pressure acting on the valve body **51** of the male semi-coupling **50**. The male semi-coupling **50** is coupled and the valve **51** is opened due to this size ratio even when there is fluid with very high pressures in the user line to which the male is connected.

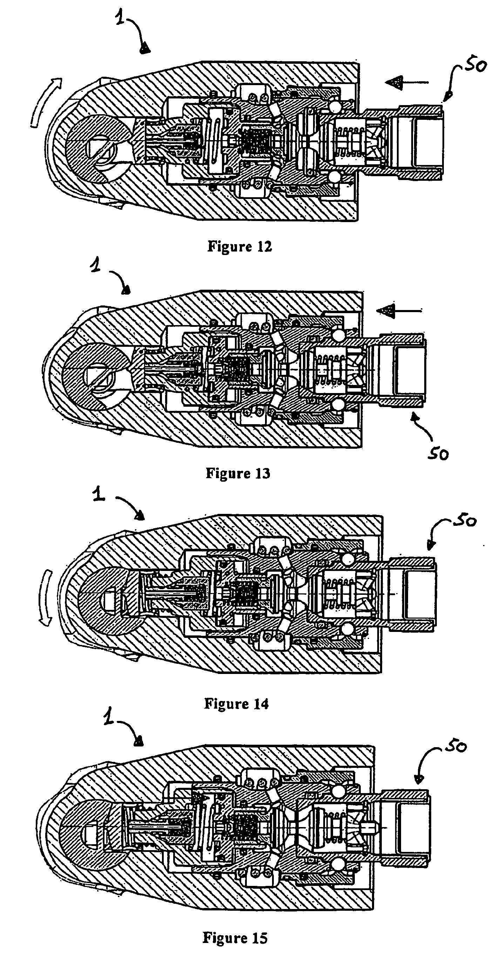

Figures 12 to 15 show the same sequence of inserting a male semi-coupling **50** into the female semi-coupling of the cartridge according to the present invention in which, however, the decompression of the female line occurs by means of the action by the operator on the decompression means **18**. As shown in figure 12, the operator operates the lever **18a**, integral with a cam in order to open the decompression valve **14** by means of pusher **18b**. Once the pressure in the female semi-coupling **3** has been discharged, the operator may complete the insertion of the male semi-coupling **50**, as shown in figure 13.

Once the insertion of the male semi-coupling has been completed, the operator should release the lever **18a** to close the decompression valve **14** (figure 14), and let the chamber **15** be filled with pressurized fluid so as to allow the forces acting on the two valve assemblies **4** and **51** to be unbalanced and so the male-female connection to be opened.

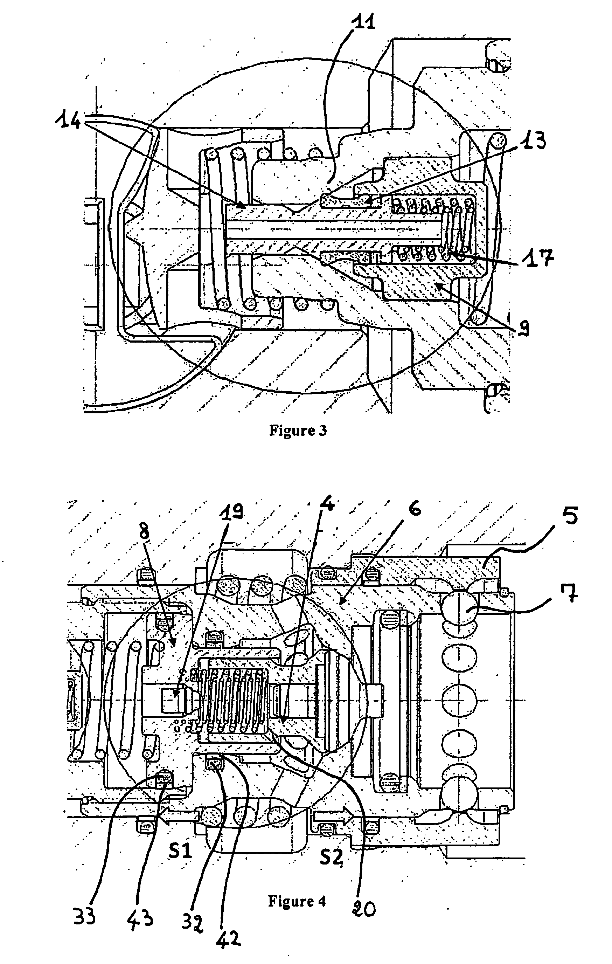

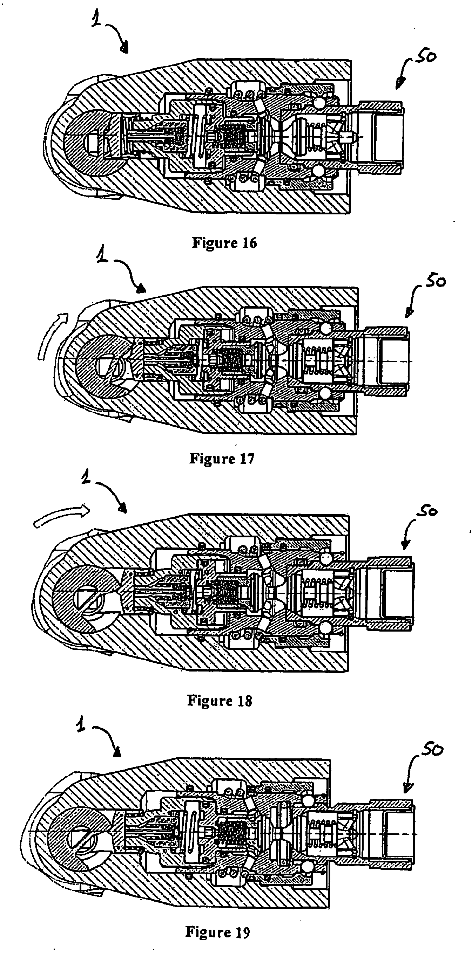

To complete the description, figures 16 to 19 show the sequence of the operations required to disconnect the male by using the lever when the line is under pressure. As shown in figure 17, the operator operates lever 18a thus causing the opening of the decompression valve **16** even if there is pressurized fluid in the line. Thus the pressure is discharged from the female semi-coupling **3**, the valve assembly (figure 4) may perform the overtravel while moving back, allowing the valve assembly **51** of the male semi-coupling **50** to close. Once the valve of the male semi-coupling is closed, a further rotation of the lever and cam **18a** causes the integral forward movement of the rear assembly **11** and of the ball set **6**, with consequential release of the balls **7** from the seats obtained on the external surface of the male, which thus may be finally taken off by the operator.

Naturally, as mentioned, opening the decompression valve **16** allows the line to be discharged by means of the clean oil conduit and to be recovered into the hydraulic circuit.

According to a preferred embodiment of the present invention shown in the accompanying figures, the decompression valve **16** is characterized by an elastomeric sealing system on the rear body **11** and by a metal cone-on-cone abutment to avoid the gasket from being extruded.

Component **9** is forced onto the rear body **11** by means of a shaped gasket **13** which creates a balanced sealing between the rear body **11** and the inner body **9**, and is provided with four recesses for the fluid passing - this causes that the force required to move the decompression rod back is independent from the pressure level. This balancing is obtained due to the particular shape of the gasket, and the rod of the decompression valve is suitably holed to avoid the "syringe effect" and therefore permit the axial travel.

The cartridge coupling according to the present invention provides a 3:1 balancing system of the forces acting on the valves of the female semi-coupling and of the male semi-coupling, so as to facilitate also the opening of the valve of the male coupling with a pressure up to three times less in the part of the female semi-coupling.

Said balancing is obtained by means of the suitable sizing of the diameter of the balancing slider **8**, on the crown of which the pressure force acts due to the fluid in chamber **15** according to the arrows **F** in figure 1, and of the valve assembly **51** on the crown of which the fluid pressure acts according to the arrows indicated by **M**, again in figure 1. By suitably sizing the thrusting crown of the balancing slider **8**, a 3:1 ratio has been obtained of the thrust forces due to the fluid pressure in favour of the thrust acting on the valve assembly **4** of the female semi-coupling. This unbalancing facilitates opening the valve assembly **51** of the male when the male semi-coupling is under pressure.

Therefore, due to their sizing, chamber **15** and balancing slider **9** are the hydraulic blocking means as they prevent obstructions and/or fluid passageway reductions even in the presence of sudden flow variations.

It is worth noting how the balancing slider **8** is associated with the rear body **11** by means of sealing elements **32**, **33** and anti-extrusion means **42**, **43**. In the example shown in the figures, e.g. in figure 2, the sealing elements **32** and **33** consist of O-ring gaskets, whereas the anti-extrusion means **42** and **43** consist of suitable shoes.

This configuration reduces the sliding friction with significant benefits on the coupling loads.

It has thus been shown how the cartridge coupling according to the present invention, characterized by a compact design and having smaller dimensions which permit the arrangement thereof in narrow spaces, allows the above-set task and objects to be achieved.

In particular it has been shown how the cartridge coupling according to the present invention allows the coupling and uncoupling loads to be reduced, thus facilitating the coupling and uncoupling operations even when there is pressurized fluid in the line, regardless of whether the pressurized fluid is in the male semi-coupling or in the female semi-coupling.

Again, the cartridge coupling according to the present invention allows a male to be inserted when there is fluid under pressure in the latter and the male to be disconnected while leaving it under pressure.

## Claims

1. A cartridge coupling (1) of the type adapted to connect a pressurized fluid line between a vehicle or apparatus and a user, comprising an external housing (2) within which a female semi-coupling (3) is inserted, comprising a front valve assembly (4) and adapted to receive a male semi-coupling (50) being also equipped with a valve assembly (51), said housing comprising at least one main supply channel, a recovery channel for the clean oil and one draining channel for the dirty oil, and further **characterized in that** it comprises decompression means (16), on said female semi-coupling (3), to moderate the pressure inside the line thus facilitating the operations of coupling and uncoupling the male semi-coupling to/from said female semi-coupling, and further comprising an internally hollow ball set (6) capable of translating with respect to said housing (2) and integral with a rear body (11), which is also internally hollow and in which a balancing slider (8) is housed, slidingly associated therewith, **characterized in that** said decompression means comprise a decompression valve (16) placed in a substantially axial position at the end opposite to said semi-coupling (3) with respect to the front valve assembly (4) and adapted to discharge the oil in said recovery channel for the clean oil, a chamber (15) adapted to be filled with pressurized fluid during the coupling operation is provided inside said rear body (11), being closed on one side by said balancing slider (8) slidingly associated with said rear body (11), and **in that** said decompression valve (16) comprises a decompression rod (14), equipped with an axial through hole, inserted into an inner body (9) with which it is slidingly associated by means of a spring, and adapted to make a seal of elastomeric type with the inner walls of said rear body (11), said inner body (9) being firmly associated with said rear body (11) and adapted to put said rod (14) in communication with said chamber (15).

2. A cartridge coupling (1) according to the preceding claim, **characterized in that** said valve assembly (4) is pushed to close the internal fluid passageway clearance of the female semi-coupling (3) by the action of a first spring (13) acting on said balancing slider (8), placed behind said valve assembly (4).

3. A cartridge coupling (1) according to the preceding claim, **characterized in that** said valve assembly (4) has an inner cavity and is coaxial to said balancing slider (8) and is slidingly associated therewith.

4. A cartridge coupling (1) according to the preceding claim, **characterized in that** said valve assembly (4) has a calibrated hole (20) adapted to put the inner cavity of said valve body (4) in communication with the exterior.

5. A cartridge coupling (1) according to the preceding claim, **characterized in that** said balancing slider (8) comprises an internal valve assembly (19) in an axial position adapted to put said chamber (15) in communication with said inner cavity of said valve assembly (4).

6. A cartridge coupling (1) according to the preceding claim, **characterized in that** said decompression valve (16) is also manually operable by means of cam (18b) and lever (18a) actuating means.

## Patentansprüche

1. Kartuschenkupplung (1) von dem Typ, der ausgebildet ist, um eine Druckfluidleitung zwischen einem Fahrzeug oder einer Vorrichtung und einem Benutzer anzuschließen, umfassend ein äußeres Gehäuse (2), in welches eine Muffenhalbkupplung (3) eingesetzt ist, die eine vordere Ventilanordnung (4) umfasst und ausgebildet ist, um eine Steckerhalbkupplung (50) aufzunehmen, die ebenfalls mit einer Ventilanordnung (51) ausgestattet ist, wobei das Gehäuse zumindest einen Hauptversorgungskanal, einen Rückgewinnungskanal für sauberes Ö1 und einen Ablaufkanal für das schmutzige Ö1 umfasst, und die ferner **dadurch gekennzeichnet ist, dass** sie Dekompressionsmittel (16) an der Muffenhalbkupplung (3) umfasst, um den Druck innerhalb der Leitung zu mindern, wodurch die Arbeitsgänge des Kuppelns und Entkuppelns der Steckerhalbkupplung mit/von der Muffenhalbkupplung erleichtert werden, und die darüber hinaus einen intern hohlen Kugelsatz (6) umfasst, der sich mit Bezug auf das Gehäuse (2) verlagern kann und einstückig mit einem hinteren Körper (11) ist, der ebenfalls intern hohl ist, und in welchem ein Ausgleichsschieber (8) untergebracht ist, der diesem verschiebbar zugeordnet ist, **dadurch gekennzeichnet, dass** die Dekompressionsmittel ein Dekompressionsventil (16) umfassen, das in einer im Wesentlichen axialen Position an dem Ende entgegengesetzt zu der Halbkupplung (3) mit Bezug auf die vordere Ventilanordnung (4) platziert ist und ausgebildet ist, um das Ö1 in dem Rückgewinnungskanal für das saubere Ö1 auszutragen, wobei eine Kammer (15), die ausgebildet ist, um während des Kupplungsarbeitsgangs mit Druckfluid gefüllt zu werden, innerhalb des hinteren Körpers (11) vorgesehen ist, welche auf einer Seite durch den Ausgleichsschieber (8) verschlossen ist, der dem hinteren Körper (11) verschiebbar zugeordnet ist, und dadurch, dass das Dekompressionsventil (16) einen Dekompressionsstab (14) umfasst, der mit einem axialen Durchgangsloch ausgestattet ist, in einen inneren Körper (9) eingesetzt ist, welchem er mittels einer Feder verschiebbar zugeordnet ist, und ausgebildet ist, um eine Dichtung vom elastomeren Typ mit den Innenwänden des hinteren Körpers (11) zu bilden, wobei der innere Körper (9) dem hinteren Körper (11) fest zugeordnet ist und ausgebildet ist, um den Stab (14) mit der Kammer (15) in Verbindung zu bringen.

2. Kartuschenkupplung (1) nach dem vorhergehenden Anspruch, **dadurch gekennzeichnet, dass** die Ventilanordnung (4) verschoben wird, um den inneren Fluiddurchgangszwischenraum der Muffenhalbkupplung (3) durch die Betätigung einer ersten Feder (13), die auf den Ausgleichsschieber (8) wirkt, welche hinter der Ventilanordnung (4) platziert ist, zu schließen.

3. Kartuschenkupplung (1) nach dem vorhergehenden Anspruch, **dadurch gekennzeichnet, dass** die Ventilanordnung (4) einen inneren Hohlraum aufweist und koaxial zu dem Ausgleichsschieber (8) ist und diesem verschiebbar zugeordnet ist.

4. Kartuschenkupplung (1) nach dem vorhergehenden Anspruch, **dadurch gekennzeichnet, dass** die Ventilanordnung (4) ein kalibriertes Loch (20) aufweist, das ausgebildet ist, um den inneren Hohlraum des Ventilkörpers (4) mit dem Außenraum in Verbindung zu bringen.

5. Kartuschenkupplung (1) nach dem vorhergehenden Anspruch, **dadurch gekennzeichnet, dass** der Ausgleichsschieber (8) eine interne Ventilanordnung (19) in einer axialen Position umfasst, die ausgebildet ist, um die Kammer (15) mit dem inneren Hohlraum der Ventilanordnung (4) in Verbindung zu bringen.

6. Kartuschenkupplung (1) nach dem vorhergehenden Anspruch, **dadurch gekennzeichnet, dass** das Dekompressionsventil (16) auch mittels eines Nocken- (18b) und Hebel-(18a)-Betätigungsmittels von Hand betätigbar ist.

## Revendications

1. Raccord de cartouche (1) du type adapté pour raccorder une ligne de fluide pressurisé entre un véhicule ou un appareil et un utilisateur, comprenant un logement externe (2) à l'intérieur duquel un demi-raccord femelle (3) est inséré, comprenant un ensemble de valve avant (4) et adapté pour recevoir un demi-raccord mâle (50) étant également équipé d'un ensemble de valve (51), ledit logement comprenant au moins un canal d'alimentation principal, un canal de récupération pour l'huile propre et un canal de drainage pour l'huile usagée, et **caractérisé en outre en ce qu'**il comprend un moyen de décompression (16), sur ledit demi-raccord femelle (3) , afin de réguler la pression à l'intérieur de la ligne facilitant ainsi les opérations d'accouplement et de désaccouplement du demi-raccord mâle vers/depuis ledit demi-raccord femelle, et comprenant en outre un ensemble de jeu de billes creuses à l'intérieur (6) capable de translation par rapport audit logement (2) et solidaire avec un corps arrière (11), qui est également creux à l'intérieur et dans lequel un curseur d'équilibrage (8) est logé, associé de façon coulissante à ce dernier, **caractérisé en ce que** ledit moyen de décompression comprend une valve de décompression (16) placée dans une position sensiblement axiale à l'extrémité à l'opposé dudit semi-raccord (3) par rapport à l'ensemble de valve avant (4) et adaptée pour rejeter l'huile dans ledit canal de récupération pour l'huile propre, une chambre (15) adaptée pour être remplie de fluide pressurisé pendant l'opération d'accouplement est agencée à l'intérieur dudit corps arrière (11), étant fermée sur un côté par ledit curseur d'équilibrage (8) associé de façon coulissante avec ledit corps arrière (11), et **en ce que** ladite valve de décompression (16) comprend une tige de décompression (14) équipée d'un trou traversant axial, insérée dans un corps interne (9) avec lequel elle est associée de façon coulissante au moyen d'un ressort, et adaptée pour faire un joint de type élastomérique avec les parois internes dudit corps arrière (11), ledit corps arrière (9) étant fermement associé audit corps arrière (11) et adapté pour mettre ladite tige (14) en communication avec ladite chambre (15).

2. Raccord de cartouche (1) selon la revendication précédente, **caractérisé en ce que** ledit ensemble de valve (4) est poussé pour fermer le débattement de voie de passage de fluide interne du demi-raccord femelle (3) par l'action d'un premier ressort (13) agissant sur ledit curseur d'équilibrage (8), placé derrière ledit ensemble de valve (4).

3. Raccord de cartouche (1) selon la revendication précédente, **caractérisé en ce que** ledit ensemble de valve (4) a une cavité interne et est coaxial audit curseur d'équilibrage (8) et est associé de façon coulissante à ce dernier.

4. Raccord de cartouche (1) selon la revendication précédente, **caractérisé en ce que** ledit ensemble de valve (4) a un trou calibré (20) adapté pour mettre la cavité interne dudit corps de valve (4) en communication avec l'extérieur.

5. Raccord de cartouche (1) selon la revendication précédente, **caractérisé en ce que** ledit curseur d'équilibrage (8) comprend un ensemble de valve interne (19) dans une position axiale adapté pour mettre ladite chambre (15) en communication avec ladite cavité interne dudit ensemble de valve (4).

6. Raccord de cartouche (1) selon la revendication précédente, **caractérisé en ce que** ladite valve de décompression (16) est également manuellement actionnable au moyen de moyens d'actionnement par came (18b) et par levier (18a).
